# EUROPEAN PATENT APPLICATION

(11) **EP 4 786 289 A1**
(43) Date of publication of application: **05.08.2026**
(21) Application number: 25165119.6
(22) Date of filing: 20.03.2025
(51) Int. Cl.: B60T 8/17, B60T 8/40

(54) **VEHICLE BRAKE SYSTEM**

(30) Priority: 03.02.2025 US 202519043644
(71) Applicant: Harley-Davidson Motor Company, Inc., Milwaukee, WI 53208 (US)
(72) Inventor: TULLOCK, Zachary, Mahomet, Illinois, 61853 (US)
(74) Representative: Kraus & Lederer PartGmbB

(57) **Abstract**

One or more example vehicles, vehicle brake systems, and computer-implemented methods of operating a vehicle brake system. The vehicle brake system includes an electro-hydraulic control unit (EHCU) operable to control flow of a working fluid through the vehicle brake system contemporaneously with a linked braking operation.

## Description

### TECHNICAL FIELD

One or more embodiments relate generally to a vehicle, a vehicle brake system, a method of operating a vehicle brake system, and a computer program product. The vehicle brake system includes an electro-hydraulic control unit (EHCU) operable to control flow of a working fluid through the vehicle brake system contemporaneously with a linked braking operation.

### BACKGROUND

Vehicles such as motorcycles having a design that incorporates an electronically-linked brake system (ELB) that links the front brake assembly and the rear brake assembly through the application of a linking pressure to the front wheel and the rear wheel in response to a single pressure or force input by a vehicle operator. General linked brake systems utilize an anti-lock brake (ABS) system having a pump and control valves as the structural architecture to accomplish linked braking. During activation of linked braking, however, the brake actuator (e.g., brake lever or brake pedal) may feel stiff to an operator. Such stiffness is caused by pressurization or pressure build-up in the ABS system during linked braking.

### BRIEF SUMMARY

In accordance with one or more embodiments, an electronically-linked braking (ELB) system for a vehicle having an EHCU operable to control flow of a working fluid through the vehicle brake system contemporaneously with a linked braking operation.

In accordance with one or more example embodiments, a vehicle brake system comprises one or more of the following: an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator (arranged externally or internally relative to the EHCU); and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with one or more example embodiments, a vehicle brake system comprises one or more of the following: a brake assembly including a front master cylinder assembly as a first hydraulic pressure source and a front brake caliper assembly as a second hydraulic pressure source; a front brake actuator; an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator (arranged at least partially external relative to the EHCU); and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with one or more example embodiments, a vehicle brake system comprises one or more of the following: an EHCU operable to control flow of brake fluid through a hydraulic circuit (that establishes hydraulic coupling between a front master cylinder assembly and a front brake caliper assembly); a brake feel simulator (arranged at least partially externally relative to the EHCU) in hydraulic communication with the hydraulic circuit; one or more sensors operable to dynamically detect as sensor data, in response to initiation of a linked braking operation), a first hydraulic pressure (i.e., outgoing hydraulic pressure of the brake fluid from the front master cylinder assembly) and a second hydraulic pressure (i.e., incoming hydraulic pressure of the brake fluid from the front brake caliper assembly); and a vehicle controller, comprising one or more processors to execute a set of instructions to: execute braking analysis based on the detected sensor data, and regulate, in response to the braking analysis, the incoming hydraulic pressure to the second hydraulic pressure source by causing selective diversion of at least a portion of pressurized working fluid from the hydraulic circuit to the brake feel simulator.

In accordance with one or more example embodiments, a vehicle brake system comprises one or more of the following: an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a sensor module having one or more sensors operable to detect a load at the first hydraulic pressure source to initiate the linked braking operation, hydraulic pressure of the working fluid from the first hydraulic pressure source and hydraulic pressure of the working fluid to the second hydraulic pressure source, executing braking analysis of the sensor data; a brake feel simulator (arranged at least partially external relative to the EHCU); and a vehicle controller, comprising one or more processors to execute a set of instructions to perform operations that include: causing detection of a load at the first hydraulic pressure source to initiate the linked braking operation, simultaneously cause detection, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with the vehicle brake system, the braking analysis comprises executing a comparison between a first pressure value associated with the detected hydraulic pressure of the working fluid from the first hydraulic pressure source and a second pressure value associated with the detected hydraulic pressure of the working fluid to the second hydraulic pressure source.

In accordance with the vehicle brake system, regulating the hydraulic pressure of the working fluid to the second hydraulic pressure source comprises causing, when the first hydraulic pressure value is less than the second hydraulic pressure value, the selective diversion of at least a portion of the working fluid from the hydraulic circuit to the brake feel simulator.

In accordance with the vehicle brake system, regulating the hydraulic pressure of the working fluid to the second hydraulic pressure source comprises causing, when the first hydraulic pressure value is less than the second hydraulic pressure value, hydraulic coupling between the hydraulic circuit and the brake feel simulator.

In accordance with the vehicle brake system, the brake feel simulator comprises one or more accumulators having a stiffness value that substantially corresponds to a stiffness value of the second hydraulic pressure source.

In accordance with the vehicle brake system, the brake feel simulator comprises one or more spring-biased accumulators having a spring stiffness value that substantially corresponds to a stiffness value of the second hydraulic pressure source.

In accordance with the vehicle brake system, the vehicle brake system comprises an electronically-linked vehicle brake system.

In accordance with one or more example embodiments, a vehicle comprises one or more of the following: a vehicle brake system that includes an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator (arranged at least partially external relative to the EHCU); and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with one or more example embodiments, a vehicle comprises one or more of the following: a vehicle brake system that includes: a brake assembly including a front master cylinder assembly as a first hydraulic pressure source and a front brake caliper assembly as a second hydraulic pressure source; a front brake actuator; an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator (arranged at least partially external relative to the EHCU); and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with one or more example embodiments, a vehicle comprises one or more of the following: a vehicle brake system that includes: an EHCU operable to control flow of brake fluid through a hydraulic circuit (that establishes hydraulic coupling between a front master cylinder assembly and a front brake caliper assembly); a brake feel simulator (arranged at least partially externally relative to the EHCU) in hydraulic communication with the hydraulic circuit; one or more sensors operable to dynamically detect as sensor data, in response to initiation of a linked braking operation, a first hydraulic pressure (i.e., outgoing hydraulic pressure of the brake fluid from the front master cylinder assembly) and a second hydraulic pressure (i.e., incoming hydraulic pressure of the brake fluid from the front brake caliper assembly); and a vehicle controller, comprising one or more processors to execute a set of instructions to: execute braking analysis based on the detected sensor data, and regulate, in response to the braking analysis, the incoming hydraulic pressure to the second hydraulic pressure source by causing selective diversion of at least a portion of pressurized working fluid from the hydraulic circuit to the brake feel simulator.

In accordance with one or more example embodiments, a vehicle comprises one or more of the following: a vehicle brake system that includes: an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a sensor module having one or more sensors operable to detect a load at the first hydraulic pressure source to initiate the linked braking operation, hydraulic pressure of the working fluid from the first hydraulic pressure source and hydraulic pressure of the working fluid to the second hydraulic pressure source, executing braking analysis of the sensor data; a brake feel simulator (arranged at least partially external relative to the EHCU); and a vehicle controller, comprising one or more processors to execute a set of instructions to perform operations that include: causing detection of a load at the first hydraulic pressure source to initiate the linked braking operation, simultaneously cause detection, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with the vehicle, the braking analysis comprises executing a comparison between a first pressure value associated with the detected hydraulic pressure of the working fluid from the first hydraulic pressure source and a second pressure value associated with the detected hydraulic pressure of the working fluid to the second hydraulic pressure source.

In accordance with the vehicle, regulating the hydraulic pressure of the working fluid to the second hydraulic pressure source comprises causing, when the first hydraulic pressure value is less than the second hydraulic pressure value, the selective diversion of at least a portion of the working fluid from the hydraulic circuit to the brake feel simulator.

In accordance with the vehicle, regulating the hydraulic pressure of the working fluid to the second hydraulic pressure source comprises causing, when the first hydraulic pressure value is less than the second hydraulic pressure value, hydraulic coupling between the hydraulic circuit and the brake feel simulator.

In accordance with the vehicle, the brake feel simulator comprises one or more accumulators having a stiffness value that substantially corresponds to a stiffness value of the second hydraulic pressure source.

In accordance with the vehicle, the brake feel simulator comprises one or more spring-biased accumulators having a spring stiffness value that substantially corresponds to a stiffness value of the second hydraulic pressure source.
In accordance with the vehicle brake system, the vehicle brake system comprises an electronically-linked vehicle brake system.

In accordance with one or more example embodiments, a computer-implemented method of operating a vehicle brake system comprises one or more of the following: detecting a load at a first hydraulic pressure source to initiate a linked braking operation; simultaneously detecting, as sensor data contemporaneously with the linked braking operation, hydraulic pressure of a working fluid from the first hydraulic pressure source and hydraulic pressure of the working fluid to a second hydraulic pressure source; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator.

In accordance with one or more example embodiments, a computer-implemented method of operating a vehicle brake system comprises one or more of the following: detecting a load at a first hydraulic pressure source to initiate a linked braking operation; simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

In accordance with the computer-implemented method, the braking analysis comprises executing a comparison between a first pressure value associated with the detected hydraulic pressure of the working fluid from the first hydraulic pressure source and a second pressure value associated with the detected hydraulic pressure of the working fluid to the second hydraulic pressure source.

In accordance with the computer-implemented method, regulating the hydraulic pressure of the working fluid to the second hydraulic pressure source comprises causing, when the first hydraulic pressure value is less than the second hydraulic pressure value, the selective diversion of at least a portion of the working fluid from the hydraulic circuit to the brake feel simulator.

In accordance with the computer-implemented method, regulating the hydraulic pressure of the working fluid to the second hydraulic pressure source comprises causing, when the first hydraulic pressure value is less than the second hydraulic pressure value, hydraulic coupling between the hydraulic circuit and the brake feel simulator.

In accordance with the computer-implemented method, the brake feel simulator comprises one or more accumulators having a stiffness value that substantially corresponds to a stiffness value of the second hydraulic pressure source.

In accordance with the computer-implemented method, the brake feel simulator comprises one or more spring-biased accumulators having a spring stiffness value that substantially corresponds to a stiffness value of the second hydraulic pressure source.

In accordance with the vehicle brake system, the vehicle brake system comprises an electronically-linked vehicle brake system.

In accordance with one or more example embodiments, a computer program product comprising at least one non-transitory computer readable medium having with a set of instructions of computer-executable program code, which when executed by one or more processors of a computing system, causes the one or more processors to perform operations that comprise one or more of the following: detecting a load at a first hydraulic pressure source of the vehicle brake system to initiate a linked braking operation; simultaneously detecting, as sensor data contemporaneously with the linked braking operation, hydraulic pressure of a working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

In accordance with one or more example embodiments, a computer program product comprising at least one non-transitory computer readable medium having with a set of instructions of computer-executable program code, which when executed by one or more processors of a computing system, causes the one or more processors to perform operations that comprise one or more of the following: detecting a load at a first hydraulic pressure source of the vehicle brake system to initiate a linked braking operation; simultaneously detecting, as sensor data contemporaneously with the linked braking operation, hydraulic pressure of the working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

In accordance with the computer program product, the braking analysis comprises executing a comparison between a first pressure value associated with the detected hydraulic pressure of the working fluid from the first hydraulic pressure source and a second pressure value associated with the detected hydraulic pressure of the working fluid to the second hydraulic pressure source.

In accordance with the computer program product, regulating the hydraulic pressure of the working fluid to the second hydraulic pressure source comprises causing, when the first hydraulic pressure value is less than the second hydraulic pressure value, the selective diversion of at least a portion of the working fluid from the hydraulic circuit to the brake feel simulator.

In accordance with the computer program product, regulating the hydraulic pressure of the working fluid to the second hydraulic pressure source comprises causing, when the first hydraulic pressure value is less than the second hydraulic pressure value, hydraulic coupling between the hydraulic circuit and the brake feel simulator.

In accordance with the computer program product, the brake feel simulator comprises one or more accumulators having a stiffness value that substantially corresponds to a stiffness value of the second hydraulic pressure source.

In accordance with the computer program product, the brake feel simulator comprises one or more spring-biased accumulators having a spring stiffness value that substantially corresponds to a stiffness value of the second hydraulic pressure source.

### BRIEF DESCRIPTION OF THE SEVERAL VIEWS OF THE DRAWINGS

The various advantages of the embodiments of the present disclosure will become apparent to one skilled in the art by reading the following specification and appended claims, and by referencing the following drawings, in which:
FIG. 1 illustrates an example vehicle, in accordance with one or more embodiments set forth, illustrated, and described herein.
FIG. 2 illustrates a block diagram for the example vehicle of FIG. 1.
FIG. 3 illustrates a block diagram of an example ELB system for the example vehicle of FIG. 1, in accordance with one or more embodiments set forth, illustrated, and described herein.
FIG. 4 illustrates a block diagram of an example vehicle brake system for the example vehicle of FIG. 1, in accordance with one or more embodiments set forth, illustrated, and described herein
FIG. 5 illustrates a diagram of one or more control blocks for operating the example vehicle brake system of FIG. 4.
FIGS. 6A through 6C respectively illustrate a schematic hydraulic circuit diagram of an example ELB system for the example vehicle of FIG. 1.
FIGS. 7 through 14 respectively illustrate a schematic diagram of example computer-implemented methods of operating a vehicle brake system, in accordance with one or more embodiments set forth, illustrated, and described herein.

### DETAILED DESCRIPTION

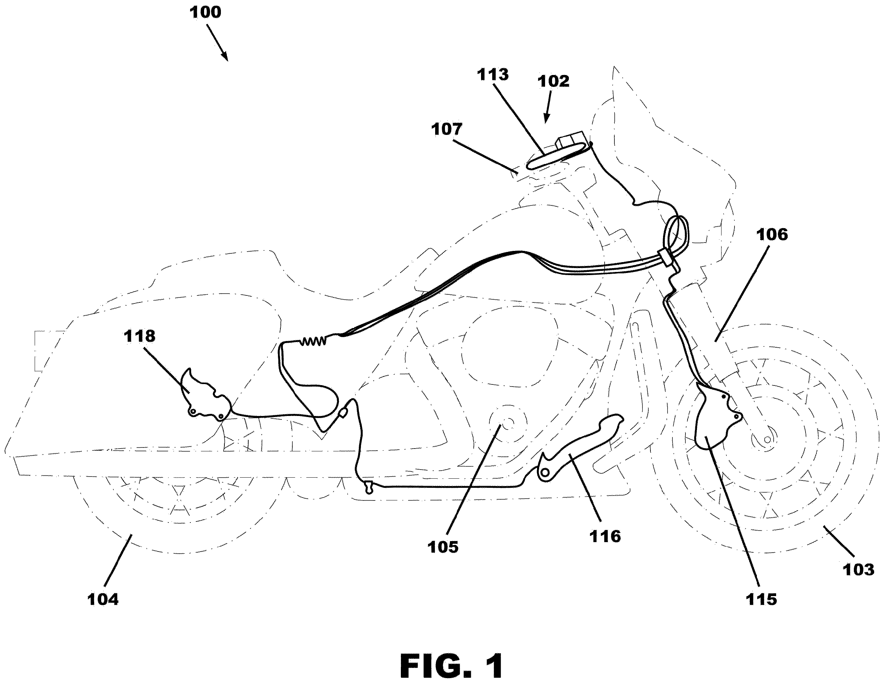

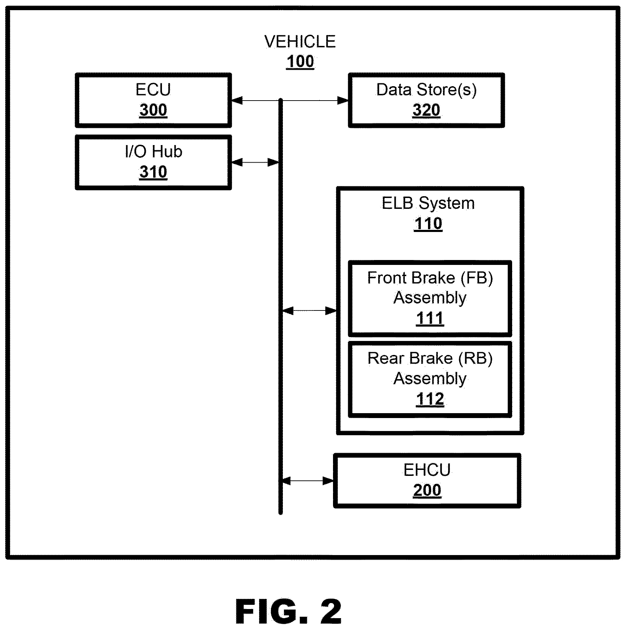

Turning to the figures, in which FIGS. 1 and 2 illustrate an example vehicle 100 for operation by a vehicle operator, the vehicle 100 having a vehicle structure(e.g., chassis, frame, subframe, body, etc.), in accordance with one or more embodiments. In accordance with one or more embodiments, a "vehicle" may be in reference to any form of motorized transport. In the illustrated embodiment of FIG. 1, the vehicle 100 comprises a two-wheeled vehicle such as a motorcycle. Embodiments, however, are not limited thereto, and thus, this disclosure contemplates the vehicle comprising a three-wheeled vehicle, a four-wheeled vehicle, or any suitable vehicle that falls within the spirit and scope of the principles of this disclosure.

In accordance with one or more embodiments, the vehicle 100 may comprise one or more operational elements. Some of the possible operational elements of the vehicle 100 are shown in FIG. 1 and will now be described. It will be understood that it is not necessary for the vehicle 100 to have all the elements forth, illustrated, and described in FIG. 1 and. The vehicle 100 may have any combination of the various elements illustrated in FIG. 1. Moreover, the vehicle 100 may have additional elements to those illustrated in FIG. 1, or may not include one or more of the elements shown in FIG. 1. Moreover, while the various operational elements are illustrated as being located within the vehicle 100, embodiments are not limited thereto, and thus, one or more of the operational elements may be located external to the vehicle 100, and even physically separated by large spatial distances.

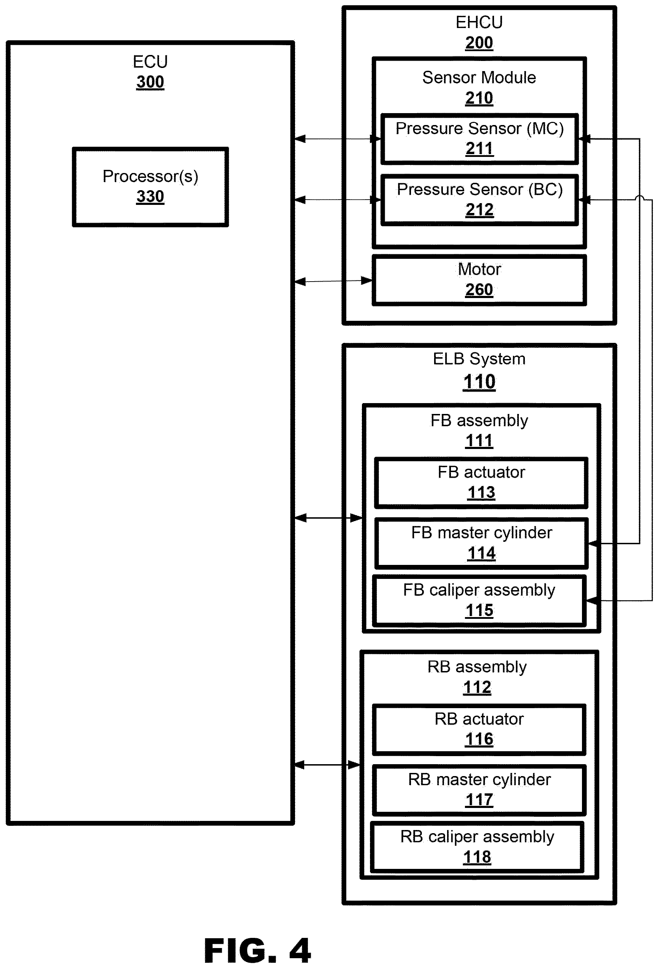

In the illustrated embodiment of FIGS. 1 through 6, the vehicle 100 further includes a steering assembly 102 pivotably mounted to the vehicle structure 101, a front wheel 103 rotatably mounted to the steering assembly 102, a rear wheel 104 rotatably mounted to the vehicle structure 101, and an engine 105 operatively connected to the vehicle structure 101. The steering assembly 102 includes forks 106, handlebars 107, and controls coupled to the handlebars 107 to facilitate control of the vehicle 100 by the vehicle operator.

As illustrated in FIG. 2, the vehicle 100 further includes an electronic brake system (EBS) such as an ELB system 110 (e.g., an anti-lock brake system (ABS)) that includes, but is not limited to, a front brake assembly 111 and a rear brake assembly 112.

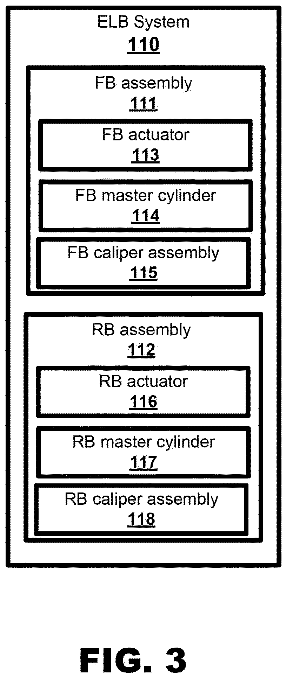

As illustrated in FIG. 3, the front brake assembly 111 includes a front brake actuator 113 (e.g., hand lever) operatively coupled to a front master cylinder assembly 114, and a front brake caliper assembly 115 that includes one or more front brake calipers operatively connected to the forks 106. The front brake caliper assembly 115 is operable to selectively engage a front wheel rotor member (not illustrated) in response to actuation of the front brake actuator 113 by the vehicle operator and/or in response to actuation of the rear brake actuator 116 contemporaneously with an autonomous or linked braking operation.

The rear brake assembly 112 includes the rear brake actuator 116 (e.g., foot pedal) operatively coupled to a rear master cylinder assembly 117, and a rear brake caliper assembly 118 that includes one or more rear brake calipers. The rear brake caliper assembly 118 is operable to selectively engage a rear wheel rotor member (not illustrated) in response to actuation of the rear brake actuator 116 by the vehicle operator and/or in response to actuation of the front brake actuator 113 contemporaneously with an autonomous or linked braking operation.

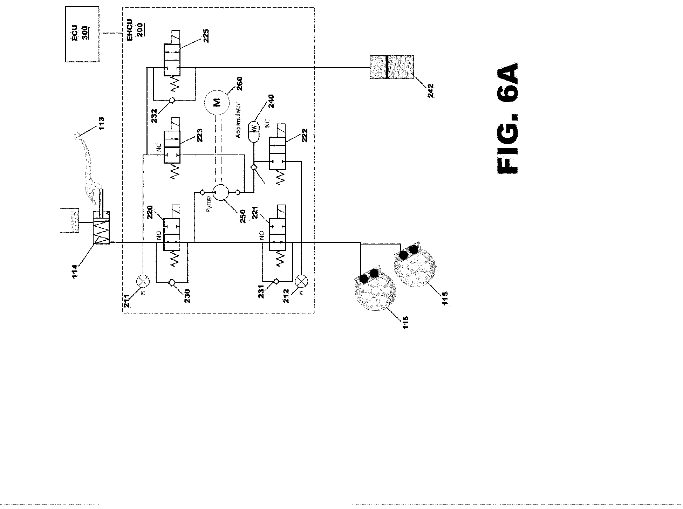

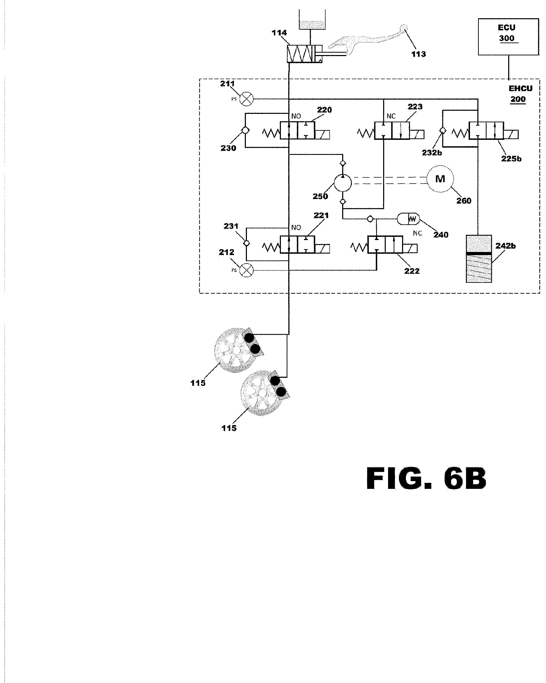

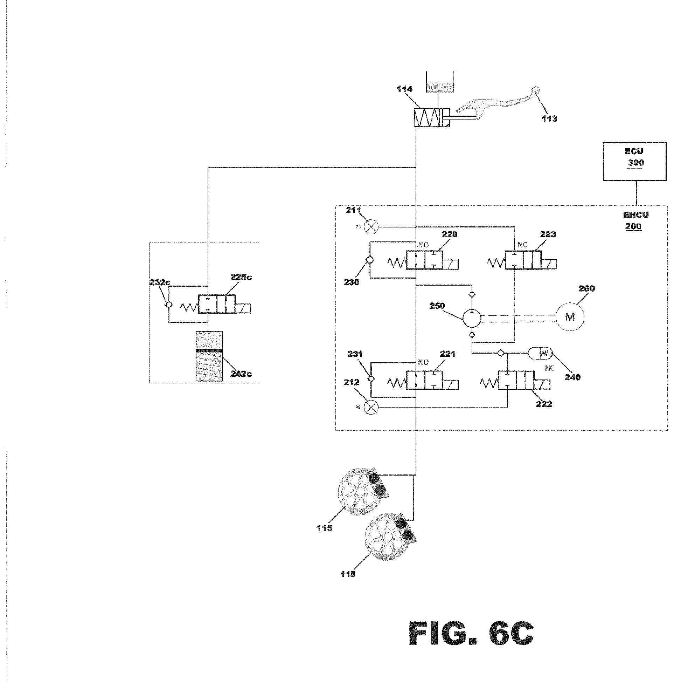

As illustrated in FIG. 6, the EHCU 200 is operable to establish hydraulic communication between the front master cylinder assembly 114 and the front brake caliper assembly 115 to facilitate flow of a working fluid (e.g., brake fluid) through a hydraulic circuit of the EHCU 200 contemporaneously with a braking operation (e.g., a linked braking operation). A pump 250, by operation of a motor 260, is operable to drive the brake fluid through the hydraulic circuit.

The hydraulic circuit is operable to maintain hydraulic coupling between the front master cylinder assembly 114 and the front brake caliper assembly 115. The hydraulic circuit includes one or more primary brake pathways that establishes the hydraulic coupling between the front master cylinder assembly 114 and the front brake caliper assembly 115, a control valve module 220, and one or more primary control valves 220-223 (e.g., linear control valves) which facilitate flow regulation of the brake fluid through the hydraulic circuit. The one or more primary control valves include a normally-open (NO) primary control valve 220, a normally-open (NO) primary control valve 221, a normally-closed (NC) primary control valve 222, and a normally-closed (NC) primary control valve 223. The hydraulic circuit also has one or more primary check valves that includes primary check valve 230 and primary check valve 231. Although in the illustrated example, the primary control valves 220-223 comprise electro-magnetic valves, embodiments are not limited thereto. This disclosure contemplates the primary control valves 220-223 comprising any suitable valve architecture that falls within the spirit and scope of the principles of this disclosure. One or more primary brake fluid storage members 11 are operable to receive the brake fluid supplied to the ELB system 110. The one or more primary brake fluid storage members 240 comprise spring-biased accumulators.

A brake feel simulator 242, 242b, 242c is in selective hydraulic communication with the front master cylinder assembly 114 and the hydraulic circuit hydraulic circuit via brake pathway that branches from the hydraulic circuit in a manner that facilitates a selective directed or diversion of at least a portion of flow of the brake fluid from the hydraulic circuit.

In the illustrated example embodiment of FIG. 6A, the brake feel simulator 242 is arranged externally relative to the EHCU 200 and the control valve 225 is located internally relative to the EHCU 200.

In the illustrated example embodiment of FIG. 6B, the brake feel simulator 242b and the control valve 225b are arranged internally relative to the EHCU 200.

In the illustrated example embodiment of FIG. 6C, the brake feel simulator 242b and the control valve 225b are arranged externally relative to the EHCU 200, thereby facilitating adding such a module to a preexisting EHCU design.

One or more secondary control valves including normally-closed (NC) secondary control valve 225, 225b, 225c and one or more secondary check valves including secondary check valve 232, 232b, 232c are provided to facilitate regulation of the selectively directed or diverted flow of brake fluid to the brake feel simulator 242, 242b, 242c.

In the illustrated example embodiments of FIGS. 6A through 6C, the brake feel simulator 242, 242b, 242c comprises one or more secondary brake fluid storage members formed as spring-biased accumulators. The one or more secondary brake fluid storage members are operable to induce a resistance to the selectively directed or diverted flow of the brake fluid in a manner that reduces stiffness at the front brake actuator 113 when engaged by the vehicle operator. This may improve or otherwise enhance the operator's experience, for the brake actuator 113 may be easily engaged by the operator. Each spring-biased accumulator comprises one or more bias members having a spring stiffness value (i.e., spring constant) that substantially corresponds to the stiffness value of the front brake caliper assembly 115. The brake pathways are operable to establish hydraulic coupling between the front master cylinder assembly 114 and the brake feel simulator 242, 242b, 242c when the detected outgoing hydraulic pressure (Pₒ) of the brake fluid flowing (from the front master cylinder assembly 114) through the one or more brake pathways is less than the dynamically captured/detected incoming hydraulic pressure (Pᵢ) (i.e., the linking pressure) of the brake fluid flowing through the one or more brake pathways to the front brake caliper assembly 115.

As illustrated in FIGS. 2 and 3, the vehicle 100 comprises a control module that serves as a host, main, or primary control system of the vehicle 100 operable to control components, systems, sub-systems, assemblies, and sub-assemblies of the EHCU 200, including, but not limited to, the motor 260. In accordance with one or more example embodiments, the control module comprises a vehicle controller or electronic control unit (ECU) 300 to control, among other things, normally-open (NO) primary control valve 220, normally-open (NO) primary control valve 221, normally-closed (NC) primary control valve 222, normally-closed (NC) primary control valve 223, and normally-closed (NC) secondary control valve 224, and the motor 260. The ECU 300 may comprise one or more processors 330. As set forth, described, and/or illustrated herein, "processor" means any component or group of components that are operable to execute any of the processes described herein or any form of instructions to carry out such processes or cause such processes to be performed. The processors 330 may be implemented with one or more general-purpose and/or one or more special-purpose processors. Examples include suitable processors graphics processors, microprocessors, microcontrollers, DSP processors, and other circuitry that may execute software (e.g., stored on a non-transitory computer-readable medium). Further examples of suitable processors include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, and a controller. The processors 330 may comprise at least one hardware circuit (e.g., an integrated circuit) operable to carry out instructions contained in program code. In embodiments having a plurality of processors 330, such processors 330 may work independently from each other, or one or more processors may work in combination with each other.

A I/O hub 310 is operatively connected to other systems and subsystems of the vehicle 100. The I/O hub 310 may comprise an input interface and an output interface.

The input interface and the output interface may be integrated as a single, unitary interface, or alternatively, be separate as independent interfaces that are operatively connected. As used herein, the input interface is defined as any device, component, system, subsystem, element, or arrangement or groups thereof that enable information/data to be entered in a machine. The input interface may receive an input from a vehicle operator or a remote operator of the vehicle 100. In one or more example embodiments, the input interface may comprise a user interface (UI), graphical user interface (GUI) such as, for example, a display, human-machine interface (HMI), or the like. Embodiments, however, are not limited thereto, and thus, this disclosure contemplates the input interface comprising any suitable configuration that falls within the spirit and scope of the principles of this disclosure. For example, the input interface may comprise a keypad, toggle switch, touch screen, multi-touch screen, button, joystick, mouse, trackball, microphone and/or combinations thereof.

As used herein, the output interface is defined as any device, component, system, subsystem, element, or arrangement or groups thereof that enable information/data to be presented to the vehicle operator and/or a remote operator of the vehicle 100. The output interface may be operable to present information/data to the vehicle occupant and/or the remote operator. The output interface may comprise one or more of a visual display or an audio display such as a microphone, earphone, and/or speaker. One or more components of the vehicle 100 may serve as both a component of the input interface and a component of the output interface.

In accordance with one or more embodiments, the vehicle 100 comprises one or more data stores 320 for storing one or more types of data. The vehicle 100 may include one or more interfaces that enable one or more systems thereof to manage, retrieve, modify, add, or delete, the data stored in the data stores 320. The data stores 320 may comprise volatile and/or non-volatile memory. Examples of suitable data stores 320 include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The data stores 320 may be a component of the processors 330, or alternatively, may be operatively connected to the processors 330 for use thereby. As set forth, described, and/or illustrated herein, "operatively connected" may include direct or indirect connections, including connections without direct physical contact.

The EHCU 200 further includes a sensor module 210 operable to, at least during operation of the vehicle 100, dynamically detect, dynamically capture, determine, assess, monitor, measure, quantify, and/or sense one or more operational parameters, elements, or features of the vehicle 100 as sensor data. As set forth, described, and/or illustrated herein, "sensor" means any device, component, system, and/or subsystem that can perform one or more of detecting, determining, assessing, monitoring, measuring, quantifying, and sensing something. The one or more sensors may be operable to detect, determine, assess, monitor, measure, quantify and/or sense in real-time. As set forth, described, and/or illustrated herein, "real-time" means a level of processing responsiveness that a user, system, or subsystem senses as sufficiently immediate for a particular process or determination to be made, or that enables the processor to keep up with some external process.

The sensor module 210 comprises one or more pressure sensors, including a first pressure sensor 211 and a second pressure sensor 212. The first pressure sensor 211 is spatially arranged or otherwise mounted at the one or more brake pathways of the hydraulic circuit downstream (e.g., in close spatial proximity to, or adjacent to) from the front master cylinder 114 to dynamically detect, determine, assess, monitor, measure, quantify, as sensor data, the hydraulic pressure of the brake fluid output from the front master cylinder 114. The second pressure sensor 212 is spatially arranged or otherwise mounted downstream of the first pressure sensor 211 at the one or more brake pathways of the hydraulic circuit and upstream (e.g., in close spatial proximity to, or adjacent to) to the brake caliper assembly 115 to dynamically detect, determine, assess, monitor, measure, quantify, as sensor data, the hydraulic pressure of the brake fluid input to the brake caliper assembly 115. The first pressure sensor 211 and the second pressure sensor 212 may work independently from each other, or alternatively, may work in combination with each other. The first pressure sensor 211 and the second pressure sensor 212 may be used in any combination and may be used redundantly to validate and improve the accuracy of the detection.

In accordance with one or more embodiments, operation of the ECU 300 may be implemented as computer readable program code that, when executed by a processor, implement one or more of the various processes set forth, described, and/or illustrated herein. The ECU 300 may be a component of the processors 330, or alternatively, may be executed on and/or distributed among other processing systems to which the processors 330 are operatively connected. The ECU 300 may include a set of logic instructions executable by the processors 330. Alternatively, or additionally, the data stores 320 may contain such logic instructions. The logic instructions may include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

In the illustrated embodiment, the ECU 300, 300b, 300c is operable to facilitate, via the sensor module 210, dynamic detection as sensor data of one or more operational features of the vehicle 100. For example, such operational features may include, but are not limited to, the hydraulic pressure at the front master cylinder 114 and the hydraulic pressure at the front brake caliper assembly 115 in response to engagement of the front brake actuator 113 by the vehicle operator. The dynamically captured/detected sensor data may be located in a vehicle database of the data stores 320 or an external source (e.g., cloud-based data store(s)).

In a standard braking application via the front brake assembly 111, selective engagement of the front brake actuator 113 by the vehicle operator causes braking of the front wheel 103 independently of the rear wheel 104. The selective engagement of the front brake actuator 113 generates a mechanical force or load that causes pressurization of brake fluid in the one or more brake pathways , which in turn causes hydraulic coupling between the front master cylinder assembly 114 and the front brake caliper assembly 115 when the normally-open (NO) primary control valve 221 and the normally-closed (NO) primary control valve 222 are in an open operating state.

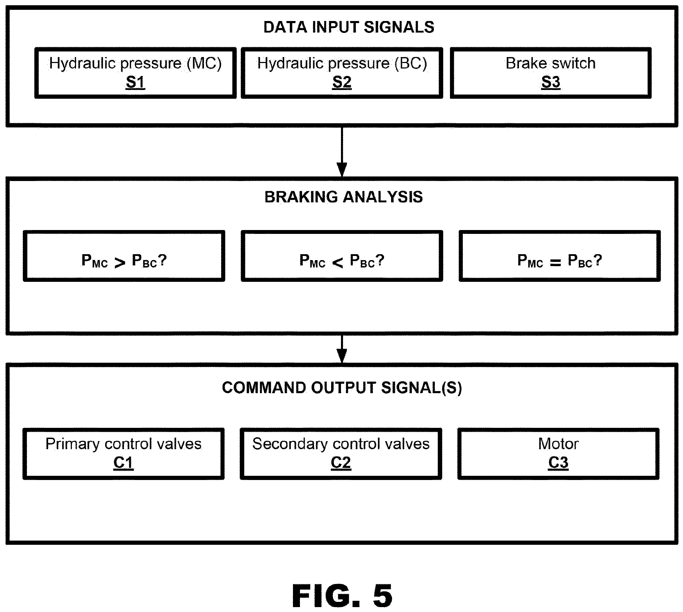

In an example contemporary linked braking operation, selective engagement of the rear brake actuator 116) by the vehicle operator (and/or activation of a brake switch via signal S3) causes linked braking between the front wheel 103 and the rear wheel 104 by dynamically distributing pressurized brake fluid to both the front brake assembly 111 and the rear brake assembly 112 in manner that induces braking at the front wheel 103 and the rear wheel 104. As illustrated in FIGS. 5 and 6A through 6C, the selective engagement of the rear brake actuator 116 generates a data input signal S1 that is transmitted to the ECU 300 which in turn, transmits one or more control signals C1 that places the normally-open (NO) primary control valve 220 in a closed operating state and the normally-closed (NC) primary control valve 223 in an open operating state. One or more control signals C3 are also transmitted to the motor 260 to cause activation of the motor 260, which in turn causes the pump 250 to drive pressurized brake fluid from a front brake fluid reservoir to the front brake caliper assembly 115. The pressurization or pressure build-up in the hydraulic circuit during linked braking, however, imparts stiffness at the front brake actuator 113 when engaged by the vehicle operator contemporaneously with linked braking.

In accordance with one or more embodiments, a technical solution to this problem is adding the brake feel simulator 242, 242b, 242c to reduce stiffness contemporaneously with linked braking. Alternatively stated, the brake feel simulator 242, 242b, 242c improves the feeling that an operator experiences in linked braking. For example, during pressurization or pressure build-up in the hydraulic circuit in a linked braking operation, the ECU 300 is operable to dynamically receive one or more data input signals S1 from the first pressure sensor 211 (related to the outgoing hydraulic pressure Pₒ) and one or more data input signals S2 (related to the incoming hydraulic pressure Pᵢ) from the second pressure sensor 212; converting the one or more data input signals S1 and the one or more data input signals S2 to hydraulic pressure values.

The ECU 300 then dynamically executes braking analysis of the dynamically captured/detected sensor data associated with the dynamically captured/detected outgoing hydraulic pressure Pₒ of the brake fluid from the front master cylinder assembly 114 and the detected incoming hydraulic pressure Pᵢ (i.e., linking pressure) of the brake fluid to the front brake caliper assembly 115. The braking analysis comprises executing, using comparator logic, a comparison between the hydraulic pressure value associated with the detected outgoing hydraulic pressure Pₒ and the hydraulic pressure value associated with the detected incoming hydraulic pressure Pᵢ (i.e., linking pressure). Alternatively or additionally, the braking analysis comprises executing a comparison between the hydraulic pressure value associated with the detected outgoing hydraulic pressure Pₒ with a predetermined threshold hydraulic pressure value stored in the one or more data stores 320.

Responsive to executing the braking analysis, the ECU 300 is operable to regulate, when the hydraulic pressure value associated with the detected outgoing hydraulic pressure Pₒ is less than the hydraulic pressure value associated with the detected incoming hydraulic pressure Pᵢ (i.e., linking pressure), the incoming hydraulic pressure Pᵢ of brake fluid to the front brake caliper assembly 115 in a manner that reduces stiffness at the front brake actuator 113 contemporaneously with linked braking.

Such regulation comprises reducing the incoming hydraulic pressure Pᵢ (i.e., linking pressure) by selectively diverting at least a portion of the pressurized brake fluid from the hydraulic circuit to the brake feel simulator 242, 242b, 242c. In particular, when the detected outgoing hydraulic pressure Pₒ is determined to be less than the incoming hydraulic pressure Pᵢ, the ECU 300 transmits one or more control signals C2 to the normally-closed (NC) secondary control valve 225 to cause opening of the normally-closed (NC) secondary control valve 225. Opening of the normally-closed (NC) secondary control valve 225, in turn, causes selective diversion of at least a portion of the outgoing pressurized brake fluid from the front master cylinder assembly 114 to the brake feel simulator 242, 242b, 242c. Particularly, a portion of flow of the outgoing pressurized brake fluid from the front master cylinder assembly 114 branches or diverts from the hydraulic circuit for flow into the brake feel simulator 242, 242b, 242c. Due to the corresponding stiffness value of the secondary brake fluid storage member and stiffness value of the front brake caliper assembly 115, the stiffness at the front brake actuator 113 when engaged by the vehicle operator is reduced.

Upon the detected outgoing hydraulic pressure Pₒ exceeding the incoming hydraulic pressure Pᵢ (i.e., the linking pressure), brake linking is stopped by the ECU 300. This is performed through the transmission of one or more control signals C1 by the ECU 300 to the normally-open (NO) primary control valve 220 to return the normally-open (NO) primary control valve 220 to an opened operating state, and one or more control signals C1 by the ECU 300 to the normally-closed (NC) primary control valve 223 to return the normally-closed (NC) primary control valve 223 to a closed operating state. One or more control signals C2 are also transmitted to the normally-closed (NC) secondary control valve 224 to return the normally-closed (NC) secondary control valve 224 to a closed operating state. In that way, the portion of pressurized brake fluid is recirculated from the brake feel simulator 242, 242b, 242c to the hydraulic circuit.

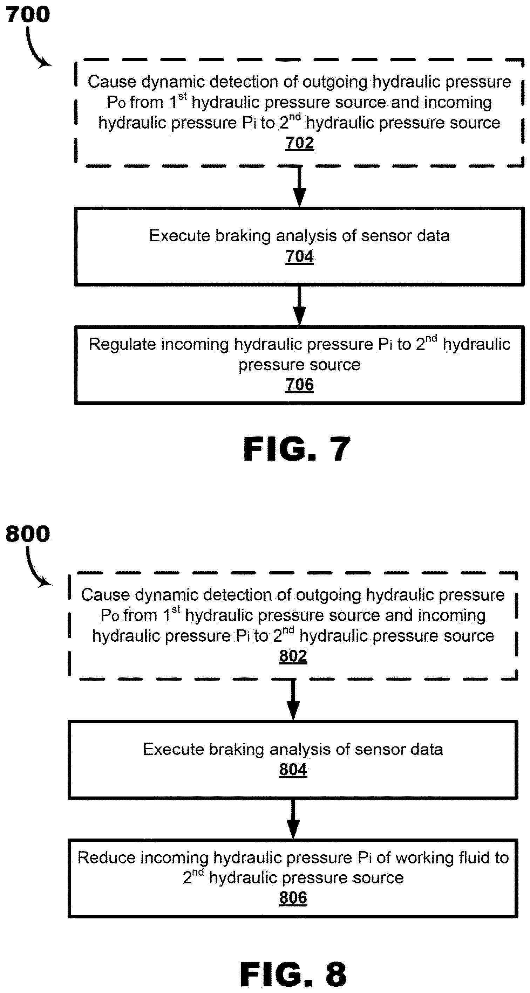

In the illustrated examples of FIGS. 7 to 14, a flowchart of computer-implemented methods 700 through 1400 for operating an electronically-linked vehicle brake system having a hydraulic circuit operable to establish hydraulic coupling between a first hydraulic pressure source and a second hydraulic pressure source. In one or more examples, the respective flowcharts of the methods 700 through 1400 may be implemented by the one or more processors 330. For example, the one or more processors 330 are operable to implement the methods 700 through 1400 using logic instructions (e.g., software), configurable logic, fixed-functionality hardware logic, etc., or any combination thereof. In one or more examples, software executed by the ECU 300 provides functionality described or illustrated herein. In particular, software (e.g., stored on a non-transitory computer-readable medium)) executing by the one or more processors 330 is operable to perform one or more processing blocks of the computer-implemented methods 700 through 1800 set forth, described, and/or illustrated herein, or provides functionality set forth, described, and/or illustrated herein.

In the illustrated example computer-implemented method 700 of FIG. 7, illustrated process block 702 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ of pressurized working fluid (e.g., brake fluid) from the first hydraulic pressure source and a second or incoming hydraulic pressure Pᵢ of pressurized working fluid (e.g., brake fluid) to a second hydraulic pressure source (e.g., front brake caliper assembly 115).

The computer-implemented method 700 may then proceed to illustrated process block 704, which includes executing braking analysis based on dynamically captured/detected sensor data associated with the dynamically captured/detected first or outgoing hydraulic pressure Pₒ and the dynamically captured/detected second or incoming hydraulic pressure Pᵢ.

In accordance with illustrated process block 704, the braking analysis comprises executing a comparison between a first pressure value associated with the dynamically captured/detected first or outgoing hydraulic pressure Pₒ and a second pressure value associated with the dynamically captured/detected second or incoming hydraulic pressure Pᵢ.

The computer-implemented method 700 may then proceed to illustrated process block 706, which includes regulating, in response to the braking analysis, the incoming hydraulic pressure Pᵢ (i.e., the linking pressure) by causing selective diversion of at least a portion of pressurized working fluid (e.g., brake fluid) from a hydraulic circuit to a brake feel simulator.

In accordance with illustrated process block 706, regulating the incoming hydraulic pressure Pᵢ comprises causing, when the dynamically captured/detected first or outgoing hydraulic pressure Pₒ is less than the dynamically captured/detected second or incoming hydraulic pressure Pᵢ, hydraulic coupling between the hydraulic circuit and the brake feel simulator.

In accordance with illustrated process block 706, establishing the hydraulic coupling between the hydraulic circuit and the brake feel simulator causes selective diversion of at least a portion of the brake fluid from the hydraulic circuit to the brake feel simulator.

In accordance with computer-implemented method 700, the brake feel simulator comprises: one or more secondary control valves to facilitate flow regulation of working fluid to/from the brake feel simulator, and one or more secondary brake fluid storage members (e.g., spring-biased secondary brake fluid storage members) comprising spring-biased accumulators having a spring stiffness value that substantially corresponds to a stiffness value of the second hydraulic pressure source.

In accordance with illustrated process block 706, establishing the hydraulic coupling between the hydraulic circuit and the brake feel simulator causes selective diversion of at least a portion of the working fluid (e.g., brake fluid) from the hydraulic circuit to the one or more secondary brake fluid storage members.

In accordance with illustrated process block 706, regulating the incoming hydraulic pressure Pᵢ comprises selectively actuating, when the dynamically captured/detected first or outgoing hydraulic pressure Pₒ is less than the dynamically captured/detected second or incoming hydraulic pressure Pᵢ, the one or more secondary control valves (e.g., normally-closed (NC) secondary control valve 225, 225b, 225c) to cause selective diversion of at least a portion of pressurized brake fluid from the hydraulic circuit to the spring-biased accumulators.

In the illustrated example computer-implemented method 800 of FIG. 8, illustrated process block 802 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 800 may then proceed to illustrated process block 804, which includes executing braking analysis based on dynamically captured/detected sensor data associated with the dynamically captured/detected first or outgoing hydraulic pressure Pₒ and the dynamically captured/detected second or incoming hydraulic pressure Pᵢ.

In accordance with illustrated process block 804, the braking analysis comprises executing a comparison between a first pressure value associated with the dynamically captured/detected first or outgoing hydraulic pressure Pₒ and a second pressure value associated with the dynamically captured/detected second or incoming hydraulic pressure Pᵢ.

The computer-implemented method 800 may then proceed to illustrated process block 806, which includes reducing, in response to the braking analysis, the hydraulic pressure at the first hydraulic pressure source by causing selective diversion of at least a portion of a pressurized working fluid (e.g., brake fluid) from a hydraulic circuit to a brake feel simulator.

In accordance with illustrated process block 806, reducing the incoming hydraulic pressure Pᵢ comprises causing, when the dynamically captured/detected first or outgoing hydraulic pressure Pₒ is less than the dynamically captured/detected second or incoming hydraulic pressure Pᵢ, hydraulic coupling between the hydraulic circuit and the brake feel simulator.

In accordance with illustrated process block 806, establishing the hydraulic coupling between the hydraulic circuit and the brake feel simulator causes selective diversion of at least a portion of the brake fluid from the hydraulic circuit to the brake feel simulator.

In accordance with computer-implemented method 800, the brake feel simulator comprises: one or more secondary control valves to regulate flow of the working fluid to/from the brake feel simulator, and one or more secondary brake fluid storage members (e.g., spring-biased secondary brake fluid storage members) having a spring stiffness value that substantially corresponds to a stiffness value of the second hydraulic pressure source.

In accordance with illustrated process block 806, establishing the hydraulic coupling between the hydraulic circuit and the brake feel simulator causes selective diversion of at least a portion of the pressurized brake fluid from the hydraulic circuit to the one or more secondary brake fluid storage members.

In accordance with illustrated process block 806, reducing the incoming hydraulic pressure Pᵢ comprises selectively actuating, when the dynamically captured/detected first or outgoing hydraulic pressure Pₒ is less than the dynamically captured/detected second or incoming hydraulic pressure Pᵢ, the one or more secondary control valves to cause selective diversion of at least a portion of pressurized brake fluid from the hydraulic circuit to the spring-biased accumulators.

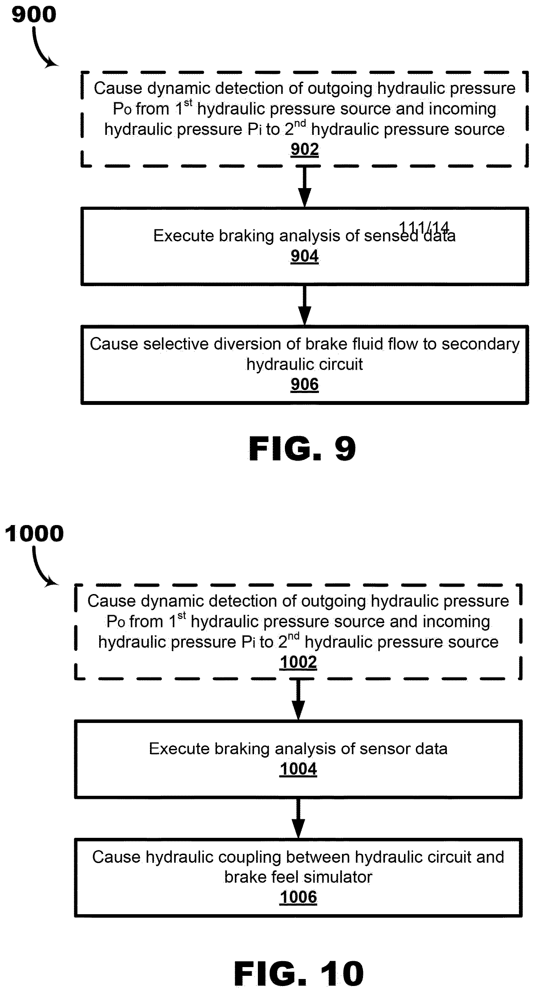

In the illustrated example computer-implemented method 900 of FIG. 9, illustrated process block 902 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 900 may then proceed to illustrated process block 904, which includes executing braking analysis based on dynamically captured/detected sensor data associated with the dynamically captured/detected first or outgoing hydraulic pressure Po and the dynamically captured/detected second or incoming hydraulic pressure Pi.

In accordance with illustrated process block 904, the braking analysis comprises executing a comparison between a first pressure value associated with the dynamically captured/detected first or outgoing hydraulic pressure Pₒ and a second pressure value associated with the dynamically captured/detected second or incoming hydraulic pressure Pᵢ.

The computer-implemented method 900 may then proceed to illustrated process block 906, which includes causing, in response to the braking analysis, selective diversion of at least a portion of pressurized working fluid (e.g., brake fluid) from a hydraulic circuit to a brake feel simulator.

In accordance with illustrated process block 906, causing selective diversion of at least a portion of the pressurized working fluid comprises causing, when the dynamically captured/detected first or outgoing hydraulic pressure Pₒ is less than the dynamically captured/detected second or incoming hydraulic pressure Pᵢ, hydraulic coupling between the hydraulic circuit and the brake feel simulator.

In accordance with computer-implemented method 900, the brake feel simulator comprises: one or more secondary control valves to regulate flow of the working fluid to/from the brake feel simulator, and one or more secondary brake fluid storage members (e.g., spring-biased secondary brake fluid storage members ) comprising spring-biased accumulators having a spring stiffness value that substantially corresponds to a stiffness value of the second hydraulic pressure source.

In accordance with illustrated process block 906, causing selective diversion of at least a portion of the pressurized working fluid comprises selectively actuating, when the detected first hydraulic pressure is less than the detected second hydraulic pressure, the one or more secondary control valves to cause selective diversion of at least a portion of pressurized brake fluid from the hydraulic circuit to the spring-biased accumulators.

In the illustrated example computer-implemented method 1000 of FIG. 10, illustrated process block 1002 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ hydraulic pressure of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 1000 may then proceed to illustrated process block 1004, which includes executing braking analysis based on dynamically captured/detected sensor data associated with the dynamically captured/detected first or outgoing hydraulic pressure Pₒ and the dynamically captured/detected second or incoming hydraulic pressure Pᵢ.

In accordance with illustrated process block 1004, the braking analysis comprises executing a comparison between a first pressure value associated with the dynamically captured/detected first or outgoing hydraulic pressure Pₒ and a second pressure value associated with the dynamically captured/detected second or incoming hydraulic pressure Pᵢ.

The computer-implemented method 1000 may then proceed to illustrated process block 1006, which includes causing, in response to the braking analysis, hydraulic coupling between a hydraulic circuit and a brake feel simulator.

In accordance with illustrated process block 1006, the hydraulic coupling is executed when the dynamically captured/detected first or outgoing hydraulic pressure Pₒ is less than the dynamically captured/detected second or incoming hydraulic pressure Pᵢ.

In accordance with computer-implemented method 1000, the brake feel simulator comprises: one or more secondary control valves to flow regulation of working fluid to/from the brake feel simulator, and one or more secondary brake fluid storage members (e.g., spring-biased secondary brake fluid storage members) comprising spring-biased accumulators having a spring stiffness value that substantially corresponds to a stiffness value of the second hydraulic pressure source.

In accordance with illustrated process block 1006, causing the hydraulic coupling comprises selectively actuating, when the dynamically captured/detected first or outgoing hydraulic pressure Pₒ is less than the dynamically captured/detected second or incoming hydraulic pressure Pᵢ, the one or more secondary control valves to cause selective diversion of at least a portion of pressurized brake fluid from the hydraulic circuit to the spring-biased accumulators.

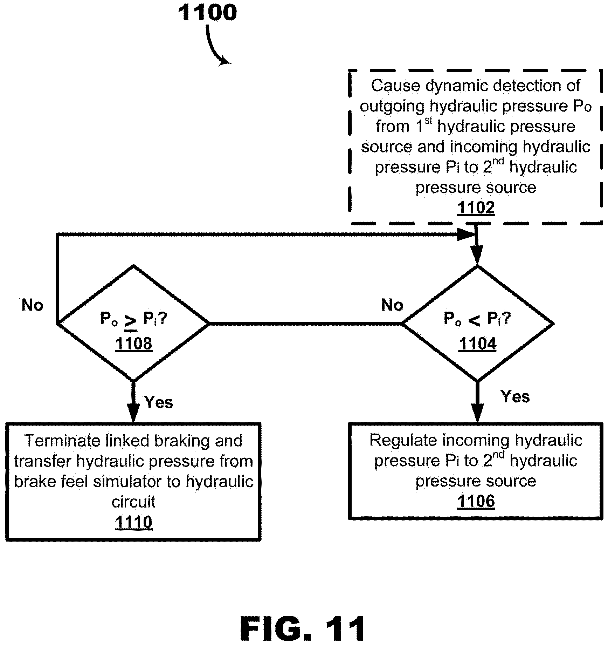

In the illustrated example computer-implemented method 1100 of FIG. 11, illustrated process block 1102 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ hydraulic pressure of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 1100 may then proceed to illustrated decision block 1104, which includes executing braking analysis of the dynamically captured/detected sensor data that includes executing a comparison between a first pressure value associated with the dynamically captured/detected first or outgoing hydraulic pressure Pₒ and a second pressure value associated with the dynamically captured/detected second or incoming hydraulic pressure Pᵢ to determine whether the dynamically captured/detected first or outgoing hydraulic pressure Pₒ is less than the dynamically captured/detected second or incoming hydraulic pressure Pᵢ.

Should the braking analysis of decision block 1104 be answered in the affirmative or "Yes," i.e., should the comparison conclude that the dynamically captured/detected first or outgoing hydraulic pressure Pₒ is less than the dynamically captured/detected second or incoming hydraulic pressure Pᵢ, the computer-implemented method 1100 proceeds to process block 1106, which includes regulating, in response to the braking analysis, the incoming hydraulic pressure Pᵢ to the second hydraulic pressure source by causing selective diversion of at least a portion of the pressurized working fluid (e.g., brake fluid) from a hydraulic circuit to a brake feel simulator.

In accordance with illustrated process block 1106, regulating the incoming hydraulic pressure Pᵢ comprises causing, when the dynamically captured/detected first or outgoing hydraulic pressure Pₒ is less than the dynamically captured/detected second or incoming hydraulic pressure Pᵢ, hydraulic coupling between the hydraulic circuit and the brake feel simulator.

In accordance with illustrated process block 1106, establishing the hydraulic coupling between the hydraulic circuit and the brake feel simulator causes selective diversion of at least a portion of the brake fluid from the hydraulic circuit to the brake feel simulator.

In accordance with computer-implemented method 1100, the brake feel simulator comprises: one or more secondary control valves to regulate flow of working fluid to/from the brake feel simulator, and one or more secondary brake fluid storage members (e.g., spring-biased secondary brake fluid storage members ) comprising spring-biased accumulators having a spring stiffness value that substantially corresponds to a stiffness value of the second hydraulic pressure source.

In accordance with illustrated process block 1106, establishing the hydraulic coupling between the hydraulic circuit and the brake feel simulator causes selective diversion of at least a portion of the working fluid (e.g., brake fluid) from the hydraulic circuit to the one or more secondary brake fluid storage members.

In accordance with illustrated process block 1106, regulating the incoming hydraulic pressure Pᵢ comprises selectively actuating, when the dynamically captured/detected first or outgoing hydraulic pressure Pₒ is less than the dynamically captured/detected second or incoming hydraulic pressure Pᵢ, the one or more secondary control valves (e.g., normally-closed (NC) secondary control valve 224) to cause selective diversion of at least a portion of pressurized brake fluid from the hydraulic circuit to the spring-biased accumulators.

Should, on the other hand, the braking analysis of decision block 1104 be answered in the negative or "No," i.e., should the comparison conclude that the dynamically captured/detected first or outgoing hydraulic pressure Pₒ is not less than the dynamically captured/detected second or incoming hydraulic pressure Pᵢ, the computer-implemented method 1100 proceeds to illustrated decision block 1108, which includes an evaluation to determine whether the first pressure value associated with the dynamically captured/detected first or outgoing hydraulic pressure Pₒ is equal to the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1108 be answered in the affirmative or "Yes," i.e., should the comparison conclude the dynamically captured/detected first or outgoing hydraulic pressure Pₒ is equal to the dynamically captured/detected second or incoming hydraulic pressure Pᵢ, the computer-implemented method 1100 proceeds to process block 1110, which includes terminating the linking application by transferring or otherwise recirculating flow of the pressurized fluid from the brake feel simulator to the hydraulic circuit.

Should, on the other hand, the braking analysis of decision block 1108 be answered in the negative or "No," i.e., should the comparison conclude that the dynamically captured/detected first or outgoing hydraulic pressure Pₒ is not equal to the dynamically captured/detected second or incoming hydraulic pressure Pᵢ, the computer-implemented method 1100 returns to illustrated process block 1104.

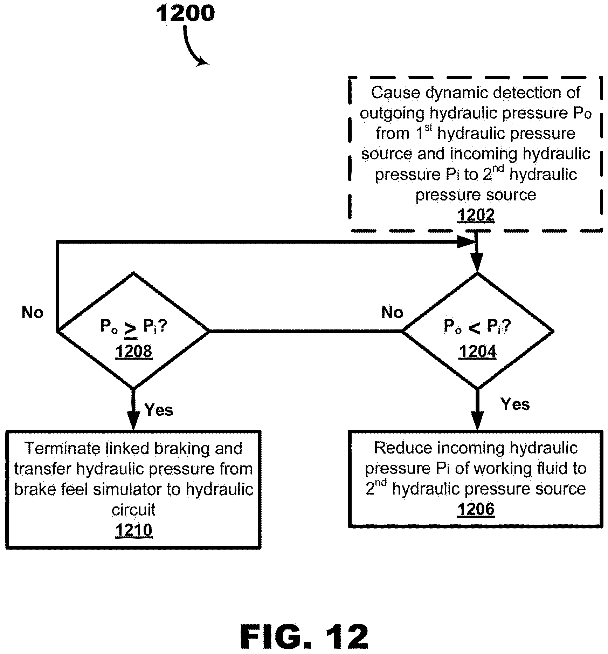

In the illustrated example computer-implemented method 1200 of FIG. 12, illustrated process block 1202 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ hydraulic pressure of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 1200 may then proceed to illustrated decision block 1204, which includes executing braking analysis of the dynamically captured/detected sensor data that includes executing a comparison between a first pressure value associated with the dynamically captured/detected first or outgoing hydraulic pressure Pₒ and a second pressure value associated with the dynamically captured/detected second or incoming hydraulic pressure Pᵢ to determine whether the dynamically captured/detected first or outgoing hydraulic pressure Pₒ is less than the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1204 be answered in the affirmative or "Yes," i.e., should the comparison conclude that the dynamically captured/detected first or outgoing hydraulic pressure Pₒ is less than the dynamically captured/detected second or incoming hydraulic pressure Pᵢ, the computer-implemented method 1200 proceeds to process block 1206, which includes reducing, in response to the braking analysis, the incoming hydraulic pressure Pᵢ to the second hydraulic pressure source by causing selective diversion of at least a portion of pressurized working fluid (e.g., brake fluid) from a hydraulic circuit to a brake feel simulator.

In accordance with illustrated process block 1206, reducing the incoming hydraulic pressure Pᵢ to the second hydraulic pressure source comprises causing, when the detected first hydraulic pressure is less than the detected second hydraulic pressure, hydraulic coupling between the hydraulic circuit and the brake feel simulator.

In accordance with computer-implemented method 1200, the brake feel simulator comprises: one or more secondary control valves to regulate flow of working fluid to/from the brake feel simulator, and one or more secondary brake fluid storage members (e.g., spring-biased secondary brake fluid storage members ) comprising spring-biased accumulators having a spring stiffness value that substantially corresponds to a stiffness value of the second hydraulic pressure source.

In accordance with illustrated process block 1206, establishing the hydraulic coupling between the hydraulic circuit and the brake feel simulator causes selective diversion of at least a portion of the brake fluid from the hydraulic circuit to the one or more secondary brake fluid storage members.

In accordance with illustrated process block 1206, reducing the incoming hydraulic pressure Pᵢ to the second hydraulic pressure source comprises selectively actuating, when the dynamically captured/detected first hydraulic pressure is less than the dynamically captured/detected second hydraulic pressure, the one or more secondary control valves to cause selective diversion of at least a portion of pressurized brake fluid from the hydraulic circuit to the spring-biased accumulators.

Should, on the other hand, the braking analysis of decision block 1204 be answered in the negative or "No," i.e., should the comparison conclude that the dynamically captured/detected first or outgoing hydraulic pressure Pₒ is not less than the dynamically captured/detected second or incoming hydraulic pressure Pᵢ, the computer-implemented method 1200 proceeds to illustrated decision block 1208, which includes an evaluation to determine whether the first pressure value associated with the dynamically captured/detected first or outgoing hydraulic pressure Pₒ is equal to the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1208 be answered in the affirmative or "Yes," i.e., should the comparison conclude the dynamically captured/detected first or outgoing hydraulic pressure Pₒ is equal to the dynamically captured/detected second or incoming hydraulic pressure Pᵢ, the computer-implemented method 1200 proceeds to process block 1210, which includes terminating the linking application by transferring or otherwise recirculating flow of the pressurized fluid from the brake feel simulator to the hydraulic circuit.

Should, on the other hand, the braking analysis of decision block 1208 be answered in the negative or "No," i.e., should the comparison conclude that the dynamically captured/detected first or outgoing hydraulic pressure Pₒ is not equal to the dynamically captured/detected second or incoming hydraulic pressure Pᵢ, the computer-implemented method 1200 returns to illustrated process block 1204.

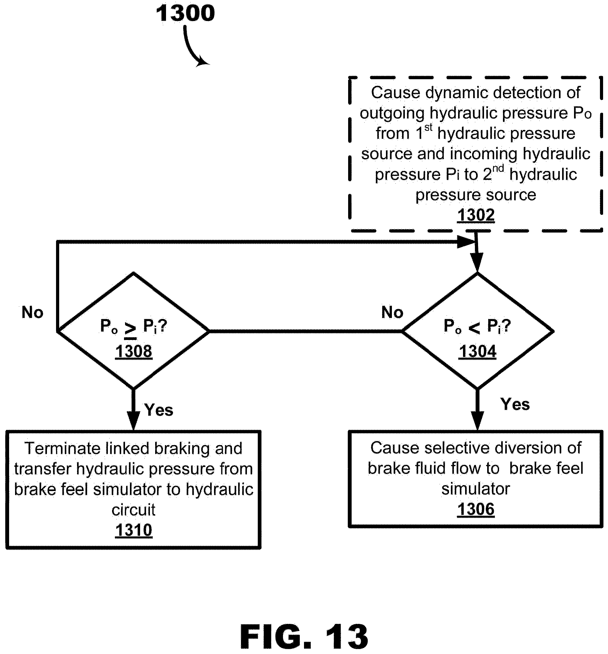

In the illustrated example computer-implemented method 1300 of FIG. 13, illustrated process block 1302 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ hydraulic pressure of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 1300 may then proceed to illustrated decision block 1304, which includes executing braking analysis of the dynamically captured/detected sensor data that includes executing a comparison between a first pressure value associated with the dynamically captured/detected first or outgoing hydraulic pressure Pₒ and a second pressure value associated with the dynamically captured/detected second or incoming hydraulic pressure Pᵢ to determine whether the dynamically captured/detected first or outgoing hydraulic pressure Pₒ is less than the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1304 be answered in the affirmative or "Yes," i.e., should the comparison conclude that the dynamically captured/detected first or outgoing hydraulic pressure Pₒ is less than the dynamically captured/detected second or incoming hydraulic pressure Pᵢ, the computer-implemented method 1300 proceeds to process block 1306, which includes causing, in response to the braking analysis, selective diversion of at least a portion of pressurized working fluid (e.g., brake fluid) from a hydraulic circuit to a brake feel simulator.

In accordance with illustrated process block 1306, causing selective diversion of at least a portion of pressurized working fluid comprises causing, when the dynamically captured/detected first hydraulic pressure is less than the dynamically captured/detected second hydraulic pressure, hydraulic coupling between the hydraulic circuit and the brake feel simulator.

In accordance with computer-implemented method 1300, the brake feel simulator comprises: one or more secondary control valves to regulate flow of working fluid to/from the brake feel simulator, and one or more secondary brake fluid storage members (e.g., spring-biased secondary brake fluid storage members ) comprising spring-biased accumulators having a spring stiffness value that substantially corresponds to a stiffness value of the second hydraulic pressure source.

In accordance with illustrated process block 1306, causing selective diversion of at least a portion of pressurized working fluid comprises selectively actuating, when the dynamically captured/detected first hydraulic pressure is less than the dynamically captured/detected second hydraulic pressure, the one or more secondary control valves to cause selective diversion of at least a portion of pressurized brake fluid from the hydraulic circuit to the spring-biased accumulators.

Should, on the other hand, the braking analysis of decision block 1304 be answered in the negative or "No," i.e., should the comparison conclude that the dynamically captured/detected first or outgoing hydraulic pressure Pₒ is not less than the dynamically captured/detected second or incoming hydraulic pressure Pᵢ, the computer-implemented method 1300 proceeds to illustrated decision block 1308, which includes an evaluation to determine whether the first pressure value associated with the dynamically captured/detected first or outgoing hydraulic pressure Pₒ is equal to the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1308 be answered in the affirmative or "Yes," i.e., should the comparison conclude the dynamically captured/detected first or outgoing hydraulic pressure Pₒ is equal to the dynamically captured/detected second or incoming hydraulic pressure Pᵢ, the computer-implemented method 1300 proceeds to process block 1310, which includes terminating the linking application by transferring or otherwise recirculating flow of the pressurized fluid from the brake feel simulator to the hydraulic circuit.

Should, on the other hand, the braking analysis of decision block 1308 be answered in the negative or "No," i.e., should the comparison conclude that the dynamically captured/detected first or outgoing hydraulic pressure Pₒ is not equal to the dynamically captured/detected second or incoming hydraulic pressure Pᵢ, the computer-implemented method 1300 returns to illustrated process block 1304.

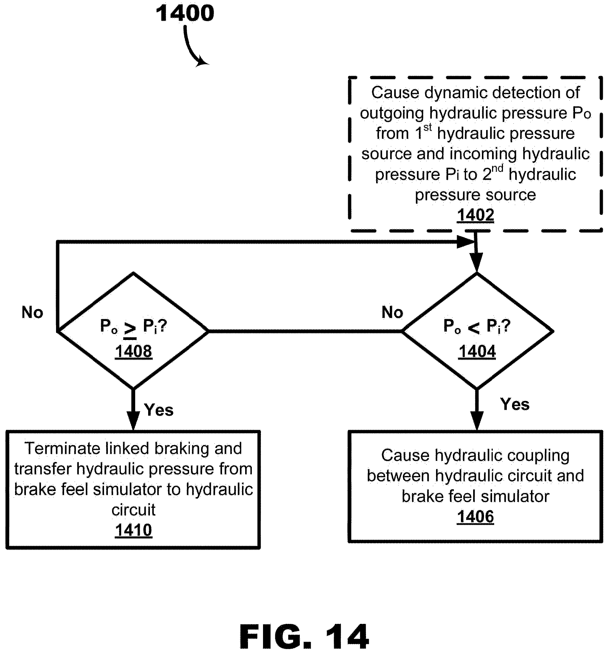

In the illustrated example computer-implemented method 1400 of FIG. 14, illustrated process block 1402 includes causing, in response to an application of hydraulic pressure at a first hydraulic pressure source (e.g., front master cylinder assembly 114) contemporaneously with a linked braking operation, dynamic detection of a first or outgoing hydraulic pressure Pₒ hydraulic pressure of working fluid (e.g., brake fluid) from the first hydraulic pressure source and a second or incoming hydraulic pressure Pᵢ of working fluid (e.g., brake fluid) to a second hydraulic pressure source (e.g., front brake caliper assembly 115).

The computer-implemented method 1400 may then proceed to illustrated decision block 1404, which includes executing braking analysis of the dynamically captured/detected sensor data that includes executing a comparison between a first pressure value associated with the dynamically captured/detected first or outgoing hydraulic pressure Pₒ and a second pressure value associated with the dynamically captured/detected second or incoming hydraulic pressure Pᵢ to determine whether the dynamically captured/detected first or outgoing hydraulic pressure Pₒ is less than the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1404 be answered in the affirmative or "Yes," i.e., should the comparison conclude that the dynamically captured/detected first or outgoing hydraulic pressure Pₒ is less than the dynamically captured/detected second or incoming hydraulic pressure Pᵢ, the computer-implemented method 1400 proceeds to process block 1406, which includes causing, in response to the braking analysis, hydraulic coupling between a hydraulic circuit and a brake feel simulator.

In accordance with illustrated process block 1406, the hydraulic coupling is executed when the dynamically captured/detected first hydraulic pressure is less than the dynamically captured/detected second hydraulic pressure.

In accordance with computer-implemented method 1400, the brake feel simulator comprises: one or more secondary control valves to regulate flow of working fluid to/from the brake feel simulator, and one or more secondary brake fluid storage members (e.g., spring-biased secondary brake fluid storage members) comprising spring-biased accumulators having a spring stiffness value that substantially corresponds to a stiffness value of the second hydraulic pressure source.

In accordance with illustrated process block 1406, causing the hydraulic coupling comprises selectively actuating, when the dynamically captured/detected first hydraulic pressure is less than the dynamically captured/detected second hydraulic pressure, the one or more secondary control valves to cause selective diversion of at least a portion of pressurized brake fluid from the hydraulic circuit to the spring-biased accumulators.

Should, on the other hand, the braking analysis of decision block 1404 be answered in the negative or "No," i.e., should the comparison conclude that the dynamically captured/detected first or outgoing hydraulic pressure Pₒ is not less than the dynamically captured/detected second or incoming hydraulic pressure Pᵢ, the computer-implemented method 1400 proceeds to illustrated decision block 1408, which includes an evaluation to determine whether the first pressure value associated with the dynamically captured/detected first or outgoing hydraulic pressure Pₒ is equal to the dynamically captured/detected second or incoming hydraulic pressure Pᵢ. Essentially, whether an equilibrium is reached between the dynamically captured/detected first or outgoing hydraulic pressure Pₒ is equal to the dynamically captured/detected second or incoming hydraulic pressure Pᵢ.

Should the braking analysis of decision block 1408 be answered in the affirmative or "Yes," i.e., should the comparison conclude the dynamically captured/detected first or outgoing hydraulic pressure Pₒ is equal to the dynamically captured/detected second or incoming hydraulic pressure Pᵢ, the computer-implemented method 1400 proceeds to process block 1410, which includes terminating the linking application by transferring or otherwise recirculating flow of the pressurized fluid from the brake feel simulator to the hydraulic circuit.

Should, on the other hand, the braking analysis of decision block 1408 be answered in the negative or "No," i.e., should the comparison conclude that the dynamically captured/detected first or outgoing hydraulic pressure Pₒ is not equal to the dynamically captured/detected second or incoming hydraulic pressure Pᵢ, the computer-implemented method 1400 returns to illustrated process block 1404.

The terms "coupled," "attached," or "connected" may be used herein to refer to any type of relationship, direct or indirect, between the components in question, and may apply to electrical, mechanical, fluid, optical, electromagnetic, electro-mechanical or other connections. Additionally, the terms "first," "second," etc. are used herein only to facilitate discussion, and carry no particular temporal or chronological significance unless otherwise indicated. The terms "cause" or "causing" means to make, force, compel, direct, command, instruct, and/or enable an event or action to occur or at least be in a state where such event or action may occur, either in a direct or indirect manner.

Those skilled in the art will appreciate from the foregoing description that the broad techniques of the embodiments of the present disclosure may be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

### EXAMPLES

The disclosure further includes additional notes and examples, as set forth in the following clauses.

### Clause A

A vehicle brake system that includes: an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator; and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause B

A vehicle brake system that includes: a brake assembly including a front master cylinder assembly as a first hydraulic pressure source and a front brake caliper assembly as a second hydraulic pressure source; a front brake actuator an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator; and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause C

A vehicle brake system that includes: an EHCU operable to control flow of brake fluid through a hydraulic circuit; a brake feel simulator in hydraulic communication with the hydraulic circuit; one or more sensors operable to dynamically detect as sensor data, in response to initiation of a linked braking operation, a first hydraulic pressure and a second hydraulic pressure; and a vehicle controller, comprising one or more processors to execute a set of instructions to: execute braking analysis based on the detected sensor data, and regulate, in response to the braking analysis, the incoming hydraulic pressure to the second hydraulic pressure source by causing selective diversion of at least a portion of pressurized working fluid from the hydraulic circuit to the brake feel simulator.

### Clause D

A vehicle brake system that includes: an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a sensor module having one or more sensors operable to detect a load at the first hydraulic pressure source to initiate the linked braking operation, hydraulic pressure of the working fluid from the first hydraulic pressure source and hydraulic pressure of the working fluid to the second hydraulic pressure source, executing braking analysis of the sensor data; a brake feel simulator; and a vehicle controller, comprising one or more processors to execute a set of instructions to perform operations that include: causing detection of a load at the first hydraulic pressure source to initiate the linked braking operation, simultaneously cause detection, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause E

A vehicle that includes: a vehicle brake system having an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator; and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause F

A vehicle that includes: a vehicle brake system having a brake assembly including a front master cylinder assembly as a first hydraulic pressure source and a front brake caliper assembly as a second hydraulic pressure source; a front brake actuator an EHCU operable to control flow of a working fluid through the vehicle brake system, the EHCU having a hydraulic circuit to establish hydraulic coupling between a first hydraulic pressure source and a second hydraulic pressure source contemporaneously with a linked braking operation; a brake feel simulator; and a vehicle controller, comprising one or more processors to execute a set of instructions to perform operations that include: detecting a load at the first hydraulic pressure source to initiate the linked braking operation, simultaneously detecting, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause G

A vehicle that includes: a vehicle brake system having an EHCU operable to control flow of brake fluid through a hydraulic circuit; a brake feel simulator in hydraulic communication with the hydraulic circuit; one or more sensors operable to dynamically detect as sensor data, in response to initiation of a linked braking operation, a first hydraulic pressure and a second hydraulic pressure; and a vehicle controller, comprising one or more processors to execute a set of instructions to: execute braking analysis based on the detected sensor data, and regulate, in response to the braking analysis, the incoming hydraulic pressure to the second hydraulic pressure source by causing selective diversion of at least a portion of pressurized working fluid from the hydraulic circuit to the brake feel simulator.

### Clause H

A vehicle that includes: a vehicle brake system having an EHCU operable to control flow of a working fluid through the vehicle brake system, the EHCU having a hydraulic circuit to establish hydraulic coupling between a first hydraulic pressure source and a second hydraulic pressure source of the vehicle brake system contemporaneously with a linked braking operation; a sensor module having one or more sensors operable to detect a load at the first hydraulic pressure source to initiate the linked braking operation, hydraulic pressure of the working fluid from the first hydraulic pressure source and hydraulic pressure of the working fluid to the second hydraulic pressure source, executing braking analysis of the sensor data; a brake feel simulator; and a vehicle controller, comprising one or more processors to execute a set of instructions to perform operations that include: causing detection of a load at the first hydraulic pressure source of the vehicle brake system to initiate the linked braking operation, simultaneously cause detection, as sensor data contemporaneously with the linked braking operation, hydraulic pressure of the working fluid from the first hydraulic pressure source and hydraulic pressure of the working fluid to the second hydraulic pressure source, executing braking analysis of the sensor data, and regulating, in response to the braking analysis and contemporaneous with the linked braking operation, the hydraulic pressure of the working fluid to the second hydraulic pressure source by causing selective diversion of at least a portion of the working fluid from the hydraulic circuit to the brake feel simulator.

### Clause I

A computer-implemented method of operating a vehicle brake system includes: detecting a load at a first hydraulic pressure source of the vehicle brake system to initiate a linked braking operation; simultaneously detecting, as sensor data contemporaneously with the linked braking operation, hydraulic pressure of a working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

### Clause J

A computer-implemented method of operating a vehicle brake system includes: detecting a load at a first hydraulic pressure source of the vehicle brake system to initiate a linked braking operation; simultaneously detecting, as sensor data contemporaneously with the linked braking operation, hydraulic pressure of the working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

### Clause K

A computer program product comprising at least one non-transitory computer readable medium having with a set of instructions of computer-executable program code, which when executed by one or more processors of a computing system, causes the one or more processors to perform operations that include: detecting a load at a first hydraulic pressure source of the vehicle brake system to initiate a linked braking operation; simultaneously detecting, as sensor data contemporaneously with the linked braking operation, hydraulic pressure of a working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

### Clause L

A computer program product comprising at least one non-transitory computer readable medium having with a set of instructions of computer-executable program code, which when executed by one or more processors of a computing system, causes the one or more processors to perform operations that include: detecting a load at a first hydraulic pressure source of the vehicle brake system to initiate a linked braking operation; simultaneously detecting, as sensor data contemporaneously with the linked braking operation, hydraulic pressure of the working fluid from the first hydraulic pressure source and hydraulic pressure of the working fluid to a second hydraulic pressure source of the vehicle brake system; executing braking analysis of the sensor data; and regulating, in response to the braking analysis and contemporaneous with the linked braking operation, the hydraulic pressure of the working fluid to the second hydraulic pressure source by causing selective diversion of at least a portion of the working fluid from the hydraulic circuit to a brake feel simulator of the vehicle brake system.

## Claims

1. A vehicle brake system, comprising:
an electro-hydraulic control unit (EHCU) (200) operable to control flow of a working fluid through the vehicle brake system, the EHCU (200) having a hydraulic circuit to establish hydraulic coupling between a first hydraulic pressure source and a second hydraulic pressure source contemporaneously with a linked braking operation;
a brake feel simulator (242, 242b, 242c); and
a vehicle controller (300), comprising one or more processors (330) to execute a set of instructions to perform operations that include:
- detecting a load at the first hydraulic pressure source to initiate the linked braking operation,
- simultaneously detecting (702, 802, 902, 1002, 1102, 1202, 1302, 1402), as sensor data contemporaneously with the linked braking operation, hydraulic pressure of the working fluid from the first hydraulic pressure source and hydraulic pressure of the working fluid to the second hydraulic pressure source,
- executing (704, 804, 904, 1004) braking analysis of the sensor data, and
- regulating (706, 1106), in response to the braking analysis and contemporaneous with the linked braking operation, the hydraulic pressure of the working fluid to the second hydraulic pressure source by causing (906, 1306) selective diversion of at least a portion of the working fluid from the hydraulic circuit to the brake feel simulator (242, 242b, 242c).

2. The vehicle brake system of claim 1,
wherein the braking analysis comprises executing (1104, 1204, 1304, 1404) a comparison between a first pressure value associated with the detected hydraulic pressure of the working fluid from the first hydraulic pressure source and a second pressure value associated with the detected hydraulic pressure of the working fluid to the second hydraulic pressure source.

3. The vehicle brake system of claim 2,
wherein regulating (706, 1106) the hydraulic pressure of the working fluid to the second hydraulic pressure source comprises causing (1306), when the first hydraulic pressure value is less than the second hydraulic pressure value, the selective diversion of at least a portion of the working fluid from the hydraulic circuit to the brake feel simulator (242, 242b, 242c).

4. The vehicle brake system of claim 2,
wherein regulating (706, 1106) the hydraulic pressure of the working fluid to the second hydraulic pressure source comprises causing (1406), when the first hydraulic pressure value is less than the second hydraulic pressure value, hydraulic coupling between the hydraulic circuit and the brake feel simulator (242, 242b, 242c).

5. The vehicle brake system of any one of the preceding claims ,
wherein the brake feel simulator (242, 242b, 242c) comprises one or more accumulators having a stiffness value that substantially corresponds to a stiffness value of the second hydraulic pressure source.

6. The vehicle brake system of any one of the preceding claims ,
wherein the brake feel simulator (242, 242b, 242c) comprises one or more spring-biased accumulators having a spring stiffness value that substantially corresponds to a stiffness value of the second hydraulic pressure source.

7. The vehicle brake system of claim 1,
wherein the vehicle brake system comprises an electronically-linked vehicle brake system.

8. A vehicle (100), comprising: a vehicle brake system that includes:
- an electro-hydraulic control unit (EHCU) (200) operable to control flow of a working fluid through the vehicle brake system, the EHCU (200) having a hydraulic circuit to establish hydraulic coupling between a first hydraulic pressure source and a second hydraulic pressure source contemporaneously with a linked braking operation;
- a brake feel simulator (242, 242b, 242c); and
- a vehicle controller (300), comprising one or more processors (330) to execute a set of instructions to perform operations that include: detecting a load at the first hydraulic pressure source to initiate the linked braking operation, simultaneously detecting (702, 802, 902, 1002, 1102, 1202, 1302, 1402), as sensor data contemporaneously with the linked braking operation, hydraulic pressure of the working fluid from the first hydraulic pressure source and hydraulic pressure of the working fluid to the second hydraulic pressure source, executing (704, 804, 904, 1004) braking analysis of the sensor data, and regulating (706, 1106), in response to the braking analysis and contemporaneous with the linked braking operation, the hydraulic pressure of the working fluid to the second hydraulic pressure source by causing (906, 1306) selective diversion of at least a portion of the working fluid from the hydraulic circuit to the brake feel simulator (242, 242b, 242c).

9. The vehicle (100) of claim 8,
wherein the braking analysis comprises executing (1104, 1204, 1304, 1404) a comparison between a first pressure value associated with the detected hydraulic pressure of the working fluid from the first hydraulic pressure source and a second pressure value associated with the detected hydraulic pressure of the working fluid to the second hydraulic pressure source.

10. The vehicle (100) of claim 9,
wherein regulating (706, 1106) the hydraulic pressure of the working fluid to the second hydraulic pressure source comprises causing (1306), when the first hydraulic pressure value is less than the second hydraulic pressure value, the selective diversion of at least a portion of the working fluid from the hydraulic circuit to the brake feel simulator (242, 242b, 242c).

11. The vehicle (100) of claim 9,
wherein regulating (706, 1106) the hydraulic pressure of the working fluid to the second hydraulic pressure source comprises causing (1406), when the first hydraulic pressure value is less than the second hydraulic pressure value, hydraulic coupling between the hydraulic circuit and the brake feel simulator (242, 242b, 242c).

12. The vehicle (100) of any one of the claims 8-11,
wherein the brake feel simulator (242, 242b, 242c) comprises one or more accumulators having a stiffness value that substantially corresponds to a stiffness value of the second hydraulic pressure source.

13. The vehicle (100) of any one of the claims 8-11 ,
wherein the brake feel simulator (242, 242b, 242c) comprises one or more spring-biased accumulators having a spring stiffness value that substantially corresponds to a stiffness value of the second hydraulic pressure source.

14. The vehicle (100) of claim 8,
wherein the vehicle brake system comprises an electronically-linked vehicle brake system.

15. A computer program product comprising at least one non-transitory computer readable medium having with a set of instructions of computer-executable program code, which when executed by one or more processors (330) of a control engine, cause the one or more processors (330) to perform operations comprising:
detecting a load at a first hydraulic pressure source to initiate a linked braking operation;
simultaneously detecting (702, 802, 902, 1002, 1102, 1202, 1302, 1402), as sensor data contemporaneously with the linked braking operation, hydraulic pressure of a working fluid from the first hydraulic pressure source and hydraulic pressure of the working fluid to a second hydraulic pressure source;
executing (704, 804, 904, 1004) braking analysis of the sensor data; and
regulating (706, 1106), in response to the braking analysis and contemporaneous with the linked braking operation, the hydraulic pressure of the working fluid to the second hydraulic pressure source by causing (906, 1306) selective diversion of at least a portion of the working fluid from a hydraulic circuit to the brake feel simulator (242, 242b, 242c).

16. The computer program product of claim 15,
wherein the braking analysis comprises executing (1104, 1204, 1304, 1404) a comparison between a first pressure value associated with the detected hydraulic pressure of the working fluid from the first hydraulic pressure source and a second pressure value associated with the detected hydraulic pressure of the working fluid to the second hydraulic pressure source.

17. The computer program product of claim 16,
wherein regulating (706, 1106) the hydraulic pressure of the working fluid to the second hydraulic pressure source comprises causing (1306), when the first hydraulic pressure value is less than the second hydraulic pressure value, the selective diversion of at least a portion of the working fluid from the hydraulic circuit to the brake feel simulator (242, 242b, 242c).

18. The computer program product of claim 16,
wherein regulating (706, 1106) the hydraulic pressure of the working fluid to the second hydraulic pressure source comprises causing (1406), when the first hydraulic pressure value is less than the second hydraulic pressure value, hydraulic coupling between the hydraulic circuit and the brake feel simulator (242, 242b, 242c).

19. The computer program product of any one of the claims 15-18,
wherein the brake feel simulator (242, 242b, 242c) comprises one or more accumulators having a stiffness value that substantially corresponds to a stiffness value of the second hydraulic pressure source.

20. The computer program product of any one of the claims 15-18,
wherein the brake feel simulator (242, 242b, 242c) comprises one or more spring-biased accumulators having a spring stiffness value that substantially corresponds to a stiffness value of the second hydraulic pressure source.
